# EUROPEAN PATENT APPLICATION

(11) **EP 4 516 500 A1**
(43) Date of publication of application: **05.03.2025**
(21) Application number: 23849489.2
(22) Date of filing: 03.08.2023
(51) Int. Cl.: B32B 17/00, B32B 17/06, B32B 7/12, B32B 37/12, B32B 1/00, C03C 27/12, B60J 1/00, B60J 7/00, B61D 25/00

(54) **ASYMMETRIC LAMINATED GLASS AND MANUFACTURING METHOD THEREFOR AND USE THEREOF**

(30) Priority: 05.08.2022 CN 202210937264
(71) Applicant: Fuyao Glass Industry Group Co., Ltd., Fuzhou, Fujian 350300 (CN)
(72) Inventor: LIN, Jun, Fuzhou, Fujian 350300 (CN); WANG, Zhe, Fuzhou, Fujian 350300 (CN); WANG, Li, Fuzhou, Fujian 350300 (CN)
(74) Representative: Patentanwälte Olbricht Buchhold Keulertz
(86) International application number: PCT/CN2023/110904
(87) International publication number: WO 2024/027785

(57) **Abstract**

Asymmetric laminated glass and a manufacturing method therefor and a use thereof. The asymmetric laminated glass comprises outer panel glass and inner panel glass which are not formed simultaneously, and an intermediate layer disposed between the outer panel glass and the inner panel glass, wherein the thickness of the outer panel glass is greater than that of the inner panel glass; at least 90% of surface regions of a second surface of the outer panel glass and of a third surface of the inner panel glass are both curved surfaces having constant Gaussian curvature; the second surface of the outer panel glass has main curvature K2z and auxiliary curvature K2f in the region, and the third surface of the inner panel glass has main curvature K3z and auxiliary curvature K3f in the region; and the following relational expressions are satisfied: K2f>K3f and 0.7≤(K3z×K3f)/(K2z×K2f)≤1.3. According to the present invention, by means of a curvature matching design, the width of an edge optical distortion region of the asymmetric laminated glass is controlled within 50 mm, and the thermoforming manufacturing feasibility of thin inner panel glass can also be improved.

## Description

The present application claims priority to a Chinese Patent Application No. 202210937264.4, filed with the China National Intellectual Property Administration on August 5, 2022 and entitled "Asymmetric laminated glass and manufacturing method therefor and use thereof", the entire contents of which are incorporated herein by reference.

### TECHNICAL FIELD

The present invention relates to an asymmetric laminated glass, a method for manufacturing the asymmetric laminated glass, and an application of the asymmetric laminated glass, and belongs to the technical field of laminated glass.

### BACKGROUND OF THE INVENTION

For bent laminated glass with asymmetric thickness, in a case where inner and outer glass panels are formed separately, even if the same material of glass, the same heat bending process and device are used, the finally formed inner and outer glass panels still have different shapes. After the inner and outer glass panels are bonded together with an adhesive sandwiched therebetween, the thinner glass panel conforms to the shape of the thicker glass panel through the bonding of an intermediate layer. Therefore, in actual production, overall shapes of the inner and outer glass panels are generally made as close as possible by controlling an edge fitting degree and a maximum central gap between the two pieces of glass.

When the inner and outer glass panels are bonded together with an adhesive sandwiched therebetween, the thinner glass panel conforms to the shape of the thicker glass panel and is forced to deform. When the curved surface of the glass is a curved surface with compound curvature, after the forced lamination, the shape mismatch of middle regions of the inner and outer glass panels is concentrated in peripheral regions, thereby generating edge optical wrinkles, resulting in poor optical effect in edge regions. Regarding this problem, at present, in the related art, the shape of the thinner glass panel is generally controlled to be as close as possible to the thicker glass panel to obtain an edge optical distortion region (≤ 50 mm) as narrow as possible, so as not to affect the normal vision of a driver. However, controlling the shape of thinner glass panel to match the shape of the thicker glass panel is easily limited by the forming ability of the thinner glass panel, especially when the thicker glass panel has a significant compound curvature (both the major curvature and the minor curvature are large), it is extremely difficult to form the thinner glass panel to completely match the shape of the thicker glass panel in most cases.

In the related art, the outer glass panel and the inner glass panel are placed on a grinding tool together to be heated at the same time, so that profiles of the two glass panels can be matched as much as possible. However, when the inner and outer glass panels have different thicknesses and materials, due to the differences in heating rate and softening point, a large hollow defect is often formed between the inner and outer glass panel, which greatly affects the optical quality of the laminated glass.

Therefore, in order to solve the problem that after the outer glass panel and the inner glass panel are separately formed, the shape mismatch causes a width of the edge optical distortion region to exceed the standard after an adhesive is sandwiched, it has become an urgent technical problem to be solved in the related art to provide a new type of asymmetric laminated glass.

### SUMMARY OF THE INVENTION

In order to solve the above disadvantages and deficiencies, one object of the present invention is to provide an asymmetric laminated glass.

Another object of the present invention is to provide a method for manufacturing the asymmetric laminated glass.

Yet another object of the present invention is to provide an application of the asymmetric laminated glass as front and rear window glass, sunroof glass, and front and rear windshield glass of an automobile, or window glass of a rail transit vehicle.

In order to achieve the above objects, in one aspect, the present invention provides an asymmetric laminated glass, the asymmetric laminated glass including an outer glass panel and an inner glass panel which are not simultaneously formed; and an intermediate layer disposed between the outer glass panel and the inner glass panel, a thickness of the outer glass panel being greater than that of the inner glass panel, in which a surface region of at least 90% or more in each of a second surface of the outer glass panel and a third surface of the inner glass panel is a curved surface with constant Gaussian curvature, the second surface of the outer glass panel has a major curvature K2z and a minor curvature K2f in the region, the third surface of the inner glass panel has a major curvature K3z and a minor curvature K3f in the region, and K2f > K3f and 0.7 ≤ (K3z × K3f)/(K2z × K2f) ≤ 1.3 are satisfied.

In the present invention, the outer glass panel has a first surface and the second surface, and the inner glass panel has the third surface and a fourth surface. The first surface is an outer surface of the outer glass panel, the second surface is an inner surface of the outer glass panel, the third surface is an inner surface of the inner glass panel, and the fourth surface is an outer surface of the inner glass panel. According to a state of the asymmetric laminated glass when installed in a vehicle, from the outside to the inside of the vehicle, the first surface, the second surface, the third surface and the fourth surface are disposed in this order. The first surface is a surface that comes into contact with the air outside the vehicle, that is, a surface facing the outside of the vehicle. The second surface is a surface where the outer glass panel comes into contact with the intermediate layer. The third surface is a surface where the inner glass panel comes into contact with the intermediate layer, that is, the second surface and the third surface come into contact with the intermediate layer. The fourth surface is a surface that comes into contact with the air inside the vehicle, that is, a surface facing the inside of the vehicle.

As a specific embodiment of the above asymmetric laminated glass of the present invention, the thickness of the outer glass panel is greater than or equal to 1.6 mm, and the thickness of the inner glass panel is less than or equal to 1.2 mm.

As a specific embodiment of the above asymmetric laminated glass of the present invention, a nominal thickness of the outer glass panel is ranged from 1.6 mm to 5.0 mm, and a nominal thickness of the inner glass panel is ranged from 0.1 mm to 1.2 mm.

As a specific embodiment of the above asymmetric laminated glass of the present invention, the outer glass panel and the inner glass panel are separately thermoformed, including the outer glass panel and the inner glass panel being separately thermoformed on the same device in batches, or being separately thermoformed on different devices.

As a specific embodiment of the above asymmetric laminated glass of the present invention, the outer glass panel and the inner glass panel are of the same or different glass selected from soda-lime silicate glass, aluminosilicate glass, lithium aluminosilicate glass, or lithium aluminoborosilicate glass.

The soda-lime silicate glass, aluminosilicate glass, lithium aluminosilicate glass and lithium aluminoborosilicate glass used in the present invention are all conventional glass materials.

As a specific embodiment of the above asymmetric laminated glass of the present invention, the major curvature and the minor curvature of the second surface of the outer glass panel respectively satisfy 1 × 10⁻⁴ mm⁻¹ ≤ K2z ≤ 2 × 10⁻³ mm⁻¹ and 1 × 10⁻⁵ mm⁻¹ ≤ K2f ≤ 1 × 10⁻³ mm⁻¹, and
the major curvature and the minor curvature of the third surface of the inner glass panel respectively satisfy 1 × 10⁻⁴ mm⁻¹ ≤ K3z ≤ 5 × 10⁻³ mm⁻¹ and 1 × 10⁻⁵ mm⁻¹ ≤ K3f ≤ 5 × 10⁻⁴ mm⁻¹.

As a specific embodiment of the above asymmetric laminated glass of the present invention, the value of (K3z × K3f)/(K2z × K2f) satisfies 0.8 ≤ (K3z × K3f)/(K2z × K2f) ≤ 1.1,
preferably, the value of (K3z × K3f)/(K2z × K2f) satisfies 0.9 ≤ (K3z × K3f)/(K2z × K2f) ≤ 1.0.

As a specific embodiment of the above asymmetric laminated glass of the present invention, a surface region of at least 95% or more, preferably 99% or more in the second surface of the outer glass panel and the third surface of the inner glass panel is a curved surface with constant Gaussian curvature.

As a specific embodiment of the above asymmetric laminated glass of the present invention, a value of a product S2 × S3 of an area ratio S2 of the curved surface with constant Gaussian curvature in the second surface of the outer glass panel and an area ratio S3 of the curved surface with constant Gaussian curvature in the third surface of the inner glass panel is not less than 0.81, preferably not less than 0.9, and more preferably not less than 0.95.

In the present invention, the curved surface with constant Gaussian curvature is a curved surface where Gaussian curvature at each point on the curved surface has the same value, that is, a curved surface where the product of the major curvature and the minor curvature is a fixed constant.

In the present invention, the major curvature and the minor curvature are defined as follows. A point on a curved surface with compound curvature has infinite orthogonal curvatures. There is a curve A that makes the absolute value of the curvature of the curve A maximum, and this absolute value of the curvature is defined as the major curvature. There is a curve B that passes through the same point as the curve A and is perpendicular to the curve A, and the absolute value of the curvature of the curve Ais defined as the minor curvature.

As a specific embodiment of the above asymmetric laminated glass of the present invention, the intermediate layer may be, for example, a polymer intermediate layer.

As a specific embodiment of the above asymmetric laminated glass of the present invention, a width of an edge optical distortion region of the asymmetric laminated glass is less than or equal to 50 mm.

On the other hand, the present invention also provides a method for manufacturing the above asymmetric laminated glass, the method including:
(1) forming the outer glass panel, at least 90% or more of a surface region in the second surface of the outer glass panel being a curved surface with constant Gaussian curvature, and measuring the major curvature K2z and the minor curvature K2f of the second surface of the outer glass panel in the region;
(2) determining the major curvature K3z and the minor curvature K3f of the third surface of the inner glass panel in the region according to expressions K2f > K3f and 0.7 ≤ (K3z × K3f)/(K2z × K2f) ≤ 1.3;
(3) forming the inner glass panel based on parameters determined in step (2), making a surface region of at least 90% or more in the third surface of the inner glass panel a curved surface with constant Gaussian curvature, and then performing ion exchange strengthening on the inner glass panel; and
(4) sandwiching an adhesive between the inner glass panel and the outer glass panel to bond the inner glass panel and the outer glass panel together, thereby obtaining the asymmetric laminated glass.

As a specific embodiment of the above method of the present invention, the forming is thermoforming, the outer glass panel and the inner glass panel are separately thermoformed, and the outer glass panel and the inner glass panel are separately thermoformed on the same device in batches, or separately thermoformed on different devices.

As a specific embodiment of the above method of the present invention, operations such as thermoforming and ion exchange strengthening are conventional operations in the related art and can be reasonably performed according to the actual needs of on-site operations as long as the objects of the present invention can be achieved.

As a specific embodiment of the above method of the present invention, in step (2), according to the expressions K2f > K3f and 0.7 ≤ (K3z × K3f)/(K2z × K2f) ≤ 1.3, and in combination with the forming ability of the inner glass panel, the most suitable curvature of the inner glass panel that can be formed is determined. Generally, compared with the outer glass panel, the inner glass panel can have a larger major curvature and a smaller minor curvature to reduce the difficulty of manufacturing the inner glass panel by thermoforming.

In yet another aspect, the present invention further provides use of the above asymmetric laminated glass as window glass for front and rear doors of a motor vehicle, sunroof glass of a motor vehicle, and front and rear windshield glass of a motor vehicle, or window glass of a rail transit vehicle.

The present invention controls the width of the edge optical distortion region of the asymmetric laminated glass within 50 mm through the curvature matching design of the outer glass panel and the inner glass panel, and can improve the feasibility of manufacturing the thinner inner glass panel by thermoforming at the same time, that is, reduce the difficulty of manufacturing the inner glass panel.

### BRIEF DESCRIPTION OF THE DRAWINGS

In order to illustrate examples of the present invention or technical solutions in the related art more clearly, the drawings needed to be used in the examples will be briefly introduced below. Obviously, the drawings in the following description are some examples in the present invention. Those having ordinary skills in the art can obtain other drawings based on these drawings without exerting creative work.
FIG. 1 is a graph showing a relation between a width of an edge optical distortion region of an asymmetric laminated glass and the value of (K3z × K3f)/(K2z × K2f) when curved surfaces with constant Gaussian curvature in a second surface of an outer glass panel and a third surface of an inner glass panel have the same ratio, both of which are 90%, in an example of the present invention.
FIG. 2 is a graph showing a relation between the width of the edge optical distortion region of the asymmetric laminated glass and the value of (K3z × K3f)/(K2z × K2f) when the curved surfaces with constant Gaussian curvature in the second surface of the outer glass panel and the third surface of the inner glass panel have the same ratio, both of which are 95%, in an example of the present invention.
FIG. 3 is a graph showing a relation between the width of the edge optical distortion region of the asymmetric laminated glass and the value of (K3z × K3f)/(K2z × K2f) when the curved surfaces with constant Gaussian curvature in the second surface of the outer glass panel and the third surface of the inner glass panel have the same ratio, both of which are 99%, according to the embodiment of the present invention.
FIG. 4 is a measured optical distortion diagram obtained by testing a width of an edge optical distortion region of an asymmetric laminated glass provided in Example 33 of the present invention.
FIG. 5 is a measured optical distortion diagram obtained by testing a width of an edge optical distortion region of an asymmetric laminated glass provided in Example 35 of the present invention.
FIG. 6 is a measured optical distortion diagram obtained by testing a width of an edge optical distortion region of an asymmetric laminated glass provided in Comparative Example 6.
FIG. 7 is a measured optical distortion diagram obtained by testing a width of an edge optical distortion region of an asymmetric laminated glass provided in Comparative Example 7.
FIG. 8 is a schematic simulation diagram of the edge optical distortion region of the asymmetric laminated glass provided in Example 35 of the present invention.
FIG. 9 is a schematic diagram of a testing device used for testing a width of an edge optical distortion (vertical stripe optical distortion) region of an asymmetric laminated glass of the present invention.
FIG. 10 is a schematic diagram of an exclusion region when testing the width of the edge optical distortion (vertical stripe optical distortion) region of the asymmetric laminated glass of the present invention.
FIG. 11 is a schematic structural diagram of an asymmetric laminated glass in an example of the present invention.

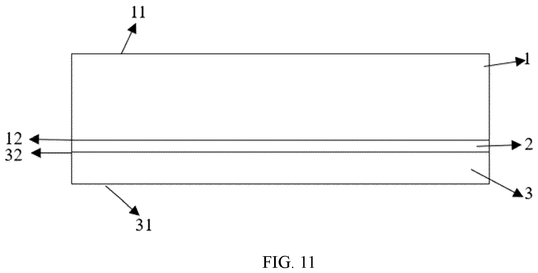

### Main reference numerals in FIG. 11:

1: Outer glass panel; 2: Intermediate layer; 3: Inner glass panel; 11: First surface; 12: Second surface; 32: Third surface; 31: Fourth surface.

### DETAILED DESCRIPTION OF THE EMBODIMENTS

It should be noted that the term "include" and any variation thereof in the specification, claims, and the above drawings of the present invention are intended to cover non-exclusive inclusions, for example, a process, a method, a system, a product, or a device including a series of steps or units is not necessarily limited to those steps or units clearly listed, but may include other steps or units that are not clearly listed or inherent to the process, the method, the product, or the device.

The "range" disclosed in the present invention is given in a form of a lower limit and an upper limit. There can be one or more lower limits, and one or more upper limits, respectively. A given range is defined by selecting a lower limit and an upper limit. The selected lower limit and upper limit define boundaries of a particular range. All ranges defined in this way are combinable, that is, any lower limit can be combined with any upper limit to form a range. For example, for a particular parameter, a range of 60 to 120 and 80 to 110 is listed, and it is understood that a range of 60 to 110 and 80 to 120 is also expected. In addition, if 1 and 2 are listed as minimum range values, and 3, 4, and 5 are listed as maximum range values, the following ranges of 1 to 3, 1 to 4, 1 to 5, 2 to 3, 2 to 4, and 2 to 5 are all expected.

In the present invention, unless otherwise specified, a numerical range "a to b" represents an abbreviation of any real number combination between a and b, where a and b are both real numbers. For example, a numerical range "0 to 5" means that all real numbers between "0 to 5" are listed in the present invention, and "0 to 5" is merely an abbreviation of these numerical combinations.

In the present invention, unless otherwise specified, all embodiments and preferred embodiments described in the present invention can be combined with each other to form a new technical solution.

In the present invention, unless otherwise specified, all technical features and preferred features described in the present invention can be combined with each other to form a new technical solution.

In order to make objects, technical solutions, and advantages of the present invention clearer, the present invention is further described in detail below with reference to attached tables, drawings, and examples. The following described examples are some, not all, of examples of the present invention, and are merely used to describe the present invention, and should not be regarded as limiting the scope of the present invention. Based on the examples in the present invention, all other examples obtained by those having ordinary skills in the art without creative work fall within the protection scope of the present invention. If specific conditions are not specified in the examples, the examples are carried out according to normal conditions or conditions recommended by a manufacturer. If a manufacturer is not specified for a reagent or an instrument used, the reagent or the instrument is a normal product that can be purchased commercially.

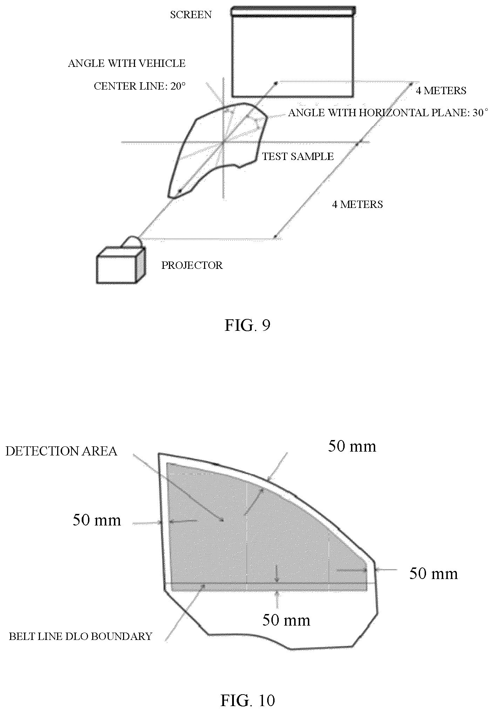

In an example of the present invention, the test of a width of an edge optical distortion (vertical stripe optical distortion) region of an asymmetric laminated glass is performed with reference to 3.2.8.2 Side Window Glass Deformation/Optical distortion in GMW3136-2011-02 Automobile Safety Glass. The schematic diagram of a test device is shown in FIG. 9. The test method includes the following steps.

A slide projector (according to ECE R43, optical distortion/optical deformation test) is used to project a striped grating (according to the zebra grating slide in DIN 52305) onto a white screen 8 meters away from the slide projector. The zebra grating should provide black vertical stripes. When correctly focused, a width of a black stripe is 12 mm.
2) The asymmetric laminated glass is placed on a bracket parallel to the light, and the center of the glass is 4 meters away from the slide projector and the screen. During the test, the glass is placed on a bracket tilted 20° relative to a vertical line (so that an angle between the glass and a center line of a vehicle is 20°) and rotated to a position where a longitudinal axis forms an angle of 30° with the light beam. The positioning makes an inner surface of the glass closest to the projector.
3) Requirements: All stripes/lines must be continuous. The maximum deformation of black grid lines on the screen caused by the glass cannot exceed ±5 mm. The deformation cannot exceed ±4 mm in any 25 cm² square area. The position of the glass should be rotated during the test to measure the point with the largest stripe deformation.
4) The range of a certain width of an edge of the glass is not included in the optical distortion investigation. Depending on the specific product structure, an exclusion region of door glass may have different requirements. In the present invention, an exclusion region of an asymmetric product has a width of 50 mm, and the schematic diagram of the exclusion region is shown in FIG. 10. Since an edge region has the greatest optical distortion degree, in the present invention, reducing a width of a region where optical distortion is severe on the edge region is considered.

### Examples 1 to 35

The examples provide a series of asymmetric laminated glass. The schematic structural diagram of the asymmetric laminated glass is shown in FIG. 11. As can be seen from FIG. 11, the asymmetric laminated glass includes an outer glass panel 1 and an inner glass panel 3 which are not simultaneously formed, and an intermediate layer 2 disposed between the outer glass panel 1 and the inner glass panel 3. A thickness of the outer glass panel 1 is greater than that of the inner glass panel 3.

The outer glass panel 1 has a first surface 11 and a second surface 12, and the inner glass panel 3 has a third surface 32 and a fourth surface 31. In a state where the asymmetric laminated glass is installed in a vehicle, from the outside to the inside of the vehicle, the first surface 11, the second surface 12, the third surface 32 and the fourth surface 31 are disposed in this order. As can be seen from FIG. 11, the first surface 11 is a surface that comes into contact with the air outside the vehicle, that is, a surface facing the outside of the vehicle. The second surface 12 is a surface where the outer glass panel 1 comes into contact with the intermediate layer 2. The third surface 32 is a surface where the inner glass panel 3 comes into contact with the intermediate layer 2, that is, the second surface 12 and the third surface 32 are into contact with the intermediate layer 2. The fourth surface 31 is a surface that comes into contact with the air inside the vehicle, that is, a surface facing the inside of the vehicle.

A surface region of at least 90% or more in the second surface of the outer glass panel and the third surface of the inner glass panel is a curved surface with constant Gaussian curvature, the second surface of the outer glass panel has a major curvature K2z and a minor curvature K2f in the region, the third surface of the inner glass panel has a major curvature K3z and a minor curvature K3f in the region, and K2f > K3f and 0.7 ≤ (K3z × K3f)/(K2z × K2f) ≤ 1.3 are satisfied.

A method for manufacturing the asymmetric laminated glass provided in Examples 1 to 35 includes:
(1) forming the outer glass panel, a surface region of at least 90% or more in the second surface of the outer glass panel being a curved surface with constant Gaussian curvature, and measuring the major curvature K2z and the minor curvature K2f of the second surface of the outer glass panel in the curved surface region with constant Gaussian curvature;
(2) determining the major curvature K3z and the minor curvature K3f of the third surface of the inner glass panel in the curved surface region with constant Gaussian curvature according to the expressions K2f > K3f and 0.7 ≤ (K3z × K3f)/(K2z × K2f) ≤ 1.3;
(3) forming the inner glass panel based on parameters determined in step (2), making a surface region of at least 90% or more in the third surface of the inner glass panel a curved surface with constant Gaussian curvature, and then performing ion exchange strengthening on the inner glass panel; and
(4) sandwiching an adhesive between the inner glass panel and the outer glass panel to bond the inner glass panel and the outer glass panel together, thereby obtaining the asymmetric laminated glass.

Here, for the asymmetric laminated glass provided in Examples 1 to 35, thickness data of the outer glass panel and the inner glass panel, data of the proportion of the curved surfaces with constant Gaussian curvature in the second surface of the outer glass panel and the third surface of the inner glass panel, data of the major curvature K2z and the minor curvature K2f of the second surface of the outer glass panel in the region, data of the major curvature K3z and the minor curvature K3f of the third surface of the inner glass panel in the region, and data of the width of the edge optical distortion region of the asymmetric laminated glass are shown in Tables 1 and 2 below.

### Comparative Examples 1 to 7

The comparative examples provide a series of asymmetric laminated glass. Each of the asymmetric laminated glass includes an outer glass panel and an inner glass panel which are not simultaneously formed, and an intermediate layer disposed between the outer glass panel and the inner glass panel. A thickness of the outer glass panel is greater than that of the inner glass panel.

Part of a surface region in a second surface of the outer glass panel and a third surface of the inner glass panel is a curved surface with constant Gaussian curvature, the second surface of the outer glass panel has a major curvature K2z and a minor curvature K2f in the region, and the third surface of the inner glass panel has a major curvature K3z and a minor curvature K3f in the region.

In the asymmetric laminated glass provided in Comparative Examples 1 to 7, thickness data of the outer glass panel and the inner glass panel, ratio data of the curved surfaces with constant Gaussian curvature in the second surface of the outer glass panel and the third surface of the inner glass panel, data of the major curvature K2z and the minor curvature K2f of the second surface of the outer glass panel in the region, data of the major curvature K3z and the minor curvature K3f of the third surface of the inner glass panel in the region, and data of the width of the edge optical distortion region of the asymmetric laminated glass are shown in Tables 1 and 2 below.

A method for manufacturing the asymmetric laminated glass provided in Comparative Examples 1 to 7 includes:
(1) forming the outer glass panel, determining an area ratio of the curved surface with constant Gaussian curvature in the second surface of the outer glass panel according to the data in Table 1, and measuring the major curvature K2z and the minor curvature K2f of the second surface of the outer glass panel in the curved surface region with constant Gaussian curvature;
(2) determining the major curvature K3z and the minor curvature K3f of the third surface of the inner glass panel in the curved surface region with constant Gaussian curvature based on the experimental data in Table 1 below;
(3) forming the inner glass panel based on parameters determined in step (2) and determining an area ratio of the curved surface with constant Gaussian curvature in the third surface of the inner glass panel based on the data in Table 1 below, and then performing ion exchange strengthening on the inner glass panel; and
(4) sandwiching an adhesive between the inner glass panel and the outer glass panel to bond the inner glass panel and the outer glass panel together, thereby obtaining the asymmetric laminated glass.

**Table 1**

| Number | Outer glass panel thickness/mm | S2/% | K2z /mm⁻¹ | K2f /mm⁻¹ |
|---|---|---|---|---|
| Example 1 | 1.6 | 90 | 5 × 10⁻⁴ | 1 × 10-⁴ |
| Example 2 | 1.6 | 90 | 5 × 10⁻⁴ | 1 × 10⁻⁴ |
| Example 3 | 1.6 | 90 | 6 × 10⁻⁴ | 1 × 10⁻⁴ |
| Example 4 | 1.6 | 90 | 4 × 10⁻⁴ | 5 × 10⁻⁵ |
| Example 5 | 1.6 | 95 | 3 × 10⁻⁴ | 5 × 10⁻⁵ |
| Comparative Example 1 | 1.6 | 90 | 5 × 10⁻⁴ | 1 × 10⁻⁴ |
| Example 6 | 2.1 | 90 | 5 × 10⁻⁴ | 1 × 10⁻⁴ |
| Example 7 | 2.1 | 90 | 5 × 10⁻⁴ | 1 × 10⁻⁴ |
| Example 8 | 2.1 | 90 | 6 × 10⁻⁴ | 1 × 10⁻⁴ |
| Example 9 | 2.1 | 95 | 3 × 10⁻⁴ | 5 × 10⁻⁵ |
| Example 10 | 2.1 | 90 | 4 × 10⁻⁴ | 5 × 10⁻⁵ |
| Comparative Example 2 | 2.1 | 80 | 5 × 10⁻⁴ | 1 × 10⁻⁴ |
| Example 11 | 2.1 | 90 | 5 × 10⁻⁴ | 1 × 10⁻⁴ |
| Example 12 | 2.1 | 90 | 5 × 10⁻⁴ | 1 × 10⁻⁴ |
| Example 13 | 2.1 | 90 | 6 × 10⁻⁴ | 1 × 10⁻⁴ |
| Example 14 | 2.1 | 99 | 3 × 10⁻⁴ | 5 × 10⁻⁵ |
| Example 15 | 2.1 | 90 | 4 × 10⁻⁴ | 5 × 10⁻⁵ |
| Comparative Example 3 | 2.1 | 90 | 5 × 10⁻⁴ | 1 × 10⁻⁴ |
| Example 16 | 3.0 | 90 | 5 × 10⁻⁴ | 1 × 10⁻⁴ |
| Example 17 | 3.0 | 90 | 5 × 10⁻⁴ | 1 × 10⁻⁴ |
| Example 18 | 3.0 | 90 | 6 × 10⁻⁴ | 1 × 10⁻⁴ |
| Example 19 | 3.0 | 95 | 3 × 10⁻⁴ | 5 × 10⁻⁵ |
| Example 20 | 3.0 | 90 | 4 × 10⁻⁴ | 5 × 10⁻⁵ |
| Comparative Example 4 | 3.0 | 99 | 3 × 10⁻⁴ | 5 × 10⁻⁵ |
| Example 21 | 3.0 | 90 | 5 × 10⁻⁴ | 1 × 10⁻⁴ |
| Example 22 | 3.0 | 90 | 5 × 10⁻⁴ | 1 × 10⁻⁴ |
| Example 23 | 3.0 | 90 | 6 × 10⁻⁴ | 1 × 10⁻⁴ |
| Example 24 | 3.0 | 99 | 3 × 10⁻⁴ | 5 × 10⁻⁵ |
| Example 25 | 3.0 | 90 | 4 × 10⁻⁴ | 5 × 10⁻⁵ |
| Comparative Example 5 | 3.0 | 90 | 4 × 10⁻⁴ | 5 × 10⁻⁵ |
| Example 26 | 3.5 | 90 | 5 × 10⁻⁴ | 1 × 10⁻⁴ |
| Example 27 | 3.5 | 90 | 5 × 10⁻⁴ | 1 × 10⁻⁴ |
| Example 28 | 3.5 | 90 | 6 × 10⁻⁴ | 1 × 10⁻⁴ |
| Example 29 | 3.5 | 95 | 3 × 10⁻⁴ | 5 × 10⁻⁵ |
| Example 30 | 3.5 | 90 | 4 × 10⁻⁴ | 5 × 10⁻⁵ |
| Comparative Example 6 | 3.5 | 90 | 5 × 10⁻⁴ | 1 × 10⁻⁴ |
| Example 31 | 3.5 | 90 | 5 × 10⁻⁴ | 1 × 10⁻⁴ |
| Example 32 | 3.5 | 90 | 5 × 10⁻⁴ | 1 × 10⁻⁴ |
| Example 33 | 3.5 | 90 | 6 × 10⁻⁴ | 1 × 10⁻⁴ |
| Example 34 | 3.5 | 99 | 3 × 10⁻⁴ | 5 × 10⁻⁵ |
| Example 35 | 3.5 | 90 | 4 × 10⁻⁴ | 5 × 10⁻⁵ |
| Comparative Example 7 | 3.5 | 99 | 3 × 10⁻⁴ | 5 × 10⁻⁵ |

**Table 2**

| Number | Inner glass panel thickness/mm | S3/% | K3z /mm⁻¹ | K3f /mm⁻¹ | S2 × S3 | (K3z × K3f) /(K2z × K2f) | Edge optical distortion region width/mm |
|---|---|---|---|---|---|---|---|
| Example 1 | 0.7 | 95 | 6 × 10⁻⁴ | 6 × 10⁻⁵ | 0.855 | 0.72 | 42 |
| Example 2 | 0.7 | 95 | 5 × 10⁻⁴ | 8 × 10⁻⁵ | 0.855 | 0.8 | 31 |
| Example 3 | 0.7 | 95 | 9 × 10⁻⁴ | 6 × 10⁻⁵ | 0.855 | 0.9 | 20 |
| Example 4 | 0.7 | 95 | 5 × 10⁻⁴ | 4 × 10⁻⁵ | 0.855 | 1 | 12 |
| Example 5 | 0.7 | 98 | 6 × 10⁻⁴ | 3 × 10⁻⁵ | 0.931 | 1.2 | 30 |
| Comparative Example 1 | 0.7 | 95 | 6 × 10⁻⁴ | 4 × 10⁻⁵ | 0.855 | 0.48 | 80 |
| Example 6 | 0.7 | 95 | 6 × 10⁻⁴ | 6 × 10⁻⁵ | 0.855 | 0.72 | 43 |
| Example 7 | 0.7 | 95 | 5 × 10⁻⁴ | 8 × 10⁻⁵ | 0.855 | 0.8 | 30 |
| Example 8 | 0.7 | 95 | 9 × 10⁻⁴ | 6 × 10⁻⁵ | 0.855 | 0.9 | 21 |
| Example 9 | 0.7 | 98 | 5 × 10⁻⁴ | 3 × 10⁻⁵ | 0.931 | 1 | 11 |
| Example 10 | 0.7 | 95 | 6 × 10⁻⁴ | 4 × 10⁻⁵ | 0.855 | 1.2 | 31 |
| Comparative Example 2 | 0.7 | 95 | 6 × 10⁻⁴ | 6 × 10⁻⁵ | 0.76 | 0.72 | 57 |
| Example 11 | 1.1 | 95 | 6 × 10⁻⁴ | 6 × 10⁻⁵ | 0.855 | 0.72 | 38 |
| Example 12 | 1.1 | 95 | 5 × 10⁻⁴ | 8 × 10⁻⁵ | 0.855 | 0.8 | 28 |
| Example 13 | 1.1 | 95 | 9 × 10⁻⁴ | 6 × 10⁻⁵ | 0.855 | 0.9 | 20 |
| Example 14 | 1.1 | 99 | 5 × 10⁻⁴ | 3 × 10⁻⁵ | 0.9801 | 1 | 10 |
| Example 15 | 1.1 | 95 | 6 × 10⁻⁴ | 4 × 10⁻⁵ | 0.855 | 1.2 | 29 |
| Comparative Example 3 | 1.¹ | 80 | 6 × 10⁻⁴ | 6 × 10⁻⁴ | 0.72 | 0.72 | 55 |
| Example 16 | 0.7 | 95 | 6 × 10⁻⁴ | 6 × 10⁻⁵ | 0.855 | 0.72 | 41 |
| Example 17 | 0.7 | 95 | 5 × 10⁻⁴ | 8 × 10⁻⁵ | 0.855 | 0.8 | 32 |
| Example 18 | 0.7 | 95 | 9 × 10⁻⁴ | 6 × 10⁻⁵ | 0.855 | 0.9 | 22 |
| Example 19 | 0.7 | 98 | 5 × 10⁻⁴ | 3 × 10⁻⁵ | 0.931 | 1 | 11 |
| Example 20 | 0.7 | 95 | 6 × 10⁻⁴ | 4 × 10⁻⁵ | 0.855 | 1.2 | 29 |
| Comparative Example 4 | 0.7 | 99 | 3 × 10⁻⁴ | 3 × 10⁻⁵ | 0.9801 | 0.6 | 52 |
| Example 21 | 1.1 | 95 | 6 × 10⁻⁴ | 6 × 10⁻⁵ | 0.855 | 0.72 | 39 |
| Example 22 | 1.1 | 95 | 5 × 10⁻⁴ | 8 × 10⁻⁵ | 0.855 | 0.8 | 28 |
| Example 23 | 1.1 | 95 | 9 × 10⁻⁴ | 6 × 10⁻⁵ | 0.855 | 0.9 | 19 |
| Example 24 | 1.1 | 99 | 5 × 10⁻⁴ | 3 × 10⁻⁵ | 0.9801 | 1 | 9 |
| Example 25 | 1.1 | 95 | 6 × 10⁻⁴ | 4 × 10⁻⁵ | 0.855 | 1.2 | 30 |
| Comparative Example 5 | 1.1 | 95 | 7 × 10⁻⁴ | 4 × 10⁻⁵ | 0.855 | 1.4 | 62 |
| Example 26 | 0.7 | 95 | 6 × 10⁻⁴ | 6 × 10⁻⁵ | 0.855 | 0.72 | 42 |
| Example 27 | 0.7 | 95 | 5 × 10⁻⁴ | 8 × 10⁻⁵ | 0.855 | 0.8 | 34 |
| Example 28 | 0.7 | 95 | 9 × 10⁻⁴ | 6 × 10⁻⁵ | 0.855 | 0.9 | 23 |
| Example 29 | 0.7 | 98 | 5 × 10⁻⁴ | 3 × 10⁻⁵ | 0.931 | 1 | 12 |
| Example 30 | 0.7 | 95 | 6 × 10⁻⁴ | 4 × 10⁻⁵ | 0.855 | 1.2 | 32 |
| Comparative Example 6 | 0.7 | 95 | 9 × 10⁻⁴ | 8 × 10⁻⁵ | 0.855 | 1.44 | 63 |
| Example 31 | 1.1 | 95 | 6 × 10⁻⁴ | 6 × 10⁻⁵ | 0.855 | 0.72 | 38 |
| Example 32 | 1.1 | 95 | 5 × 10⁻⁴ | 8 × 10⁻⁵ | 0.855 | 0.8 | 29 |
| Example 33 | 1.1 | 95 | 9 × 10⁻⁴ | 6 × 10⁻⁵ | 0.855 | 0.9 | 20 |
| Example 34 | 1.1 | 99 | 5 × 10⁻⁴ | 3 × 10⁻⁵ | 0.9801 | 1 | 10 |
| Example 35 | 1.1 | 95 | 5 × 10⁻⁴ | 4 × 10⁻⁵ | 0.855 | 1.2 | 30 |
| Comparative Example 7 | 1.1 | 99 | 4 × 10⁻⁴ | 6 × 10⁻⁵ | 0.9801 | 1.6 | 80 |

The outer glass panel used in Examples 1 to 35 and Comparative Examples 1 to 7 is soda-lime silicate glass, and the inner glass panel is aluminosilicate glass. The composition of oxides of the soda-lime silicate glass and the aluminosilicate glass are shown in Table 3 below, in terms of mass percentage.

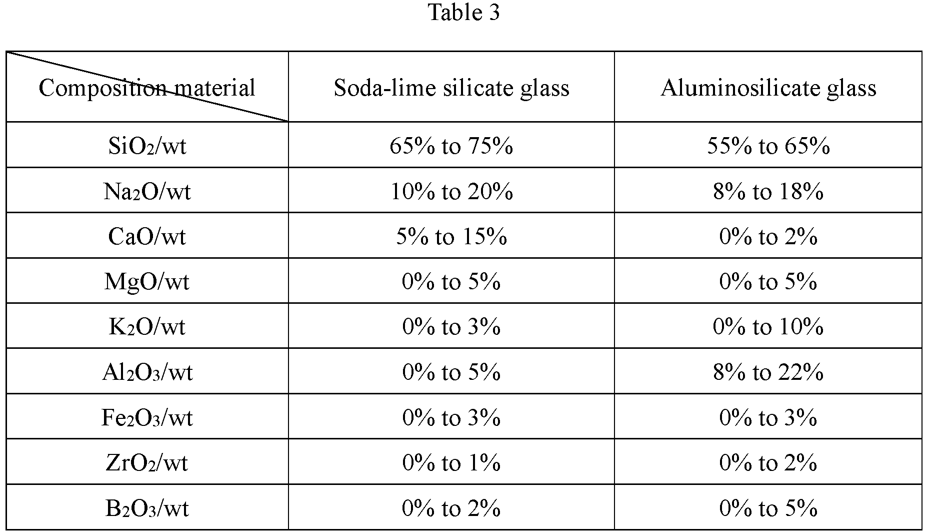

Note: In the present invention, a curvature test method includes the following. First, the glass is placed on a suitable support frame (a multi-point or ring support frame that conforms to the actual profile of the glass) to be in a free state, then a three-dimensional coordinate measurement system is used to measure spatial points of the surface of the solid glass and establish a three-dimensional curved surface, and finally, the major curvature and minor curvature can be quickly checked on commonly used three-dimensional software (such as Catia, PROE or UG).

It can be seen from the above Tables 1 and 2 that Example 1 and Comparative Example 1 have the same curvature change trend, that is, compared with the major curvature and minor curvature of the outer glass panel, the major curvature of the inner glass panel is larger and the minor curvature is smaller, and both satisfy K2f > K3f. However, in Comparative Example 1, the value of (K3z × K3f)/(K2z × K2f) is smaller, which is only 0.48 and does not satisfy 0.7 ≤ (K3z × K3f)/(K2z × K2f) ≤ 1.3, so that the width of the edge optical distortion region of the asymmetric laminated glass provided in Comparative Example 1 exceeds the standard (> 50 mm).

By comparing the experimental data of Example 6 and Comparative Example 2 in Tables 1 and 2, it can also be seen that compared with Example 6, the curved surface with constant Gaussian curvature of the second surface of the outer glass panel in Comparative Example 2 accounts for only 80%, and the value of S2 × S3 is only 0.76, which is less than 0.81 and is not within the range required by the present invention. Even if the curvatures of the curved surface regions with constant Gaussian curvature in the second surface of the outer glass panel and the third surface of the inner glass panel simultaneously satisfy K2f > K3f and 0.7 ≤ (K3z × K3f)/(K2z × K2f) ≤ 1.3, the width of the edge optical distortion region of the asymmetric laminated glass provided in Comparative Example 2 still exceeds the standard (> 50 mm).

By comparing the experimental data of Example 11 and Comparative Example 3 in Tables 1 and 2, it can also be seen that compared with Example 11, the curved surface with constant Gaussian curvature of the third surface of the inner glass panel in Comparative Example 3 accounts for only 80%, and the value of S2 × S3 is only 0.72, which is less than 0.81 and is not within the range required by the present invention. Even if the curvatures of the curved surface regions with constant Gaussian curvature in the second surface of the outer glass panel and the third surface of the inner glass panel simultaneously satisfy K2f > K3f and 0.7 ≤ (K3z × K3f)/(K2z × K2f) ≤ 1.3, the width of the edge optical distortion region of the asymmetric laminated glass provided in Comparative Example 3 still exceeds the standard (> 50 mm).

By comparing the experimental data of Example 19 and Comparative Example 4 in Tables 1 and 2, it can also be seen that compared with Example 19, the value of (K3z × K3f)/(K2z × K2f) in Comparative Example 4 is lower, which is only 0.6 and is not within the range required by the present invention. At this time, even if the ratios of the curved surfaces with constant Gaussian curvature in the second surface of the outer glass panel and the third surface of the inner glass panel are both up to 99%, and the value of S2 × S3 is up to 0.9801, the width of the edge optical distortion region of the asymmetric laminated glass provided in Comparative Example 4 still exceeds the standard (> 50 mm).

It can be seen from the above Tables 1 and 2 that Example 25 and Comparative Example 5, as well as Example 26 and Comparative Example 6, have the same curvature change trend, the ratio of the curved surface with constant Gaussian curvature, and the value of S2 × S3. That is, compared with the major curvature and the minor curvature of the outer glass panel, the major curvature of the inner glass panel is larger, the minor curvature is smaller, and both satisfy K2f > K3f. However, in Comparative Examples 5 and 6, the values of (K3z × K3f)/(K2z × K2f) are both larger, which are 1.4 and 1.44, respectively, and do not satisfy 0.7 ≤ (K3z × K3f)/(K2z × K2f) ≤ 1.3, so that the width of the edge optical distortion region of the asymmetric laminated glass provided in Comparative Examples 5 and 6 exceeds the standard (> 50 mm).

By comparing the experimental data of Example 34 and Comparative Example 7 in Tables 1 and 2, it can also be seen that compared with Example 34, the value of (K3z × K3f)/(K2z × K2f) in Comparative Example 7 is larger, which is 1.6 and is not within the range required by the present invention. At this time, even if the ratios of the curved surfaces with constant Gaussian curvature in the second surface of the outer glass panel and the third surface of the inner glass panel are both up to 99%, and the value of S2 × S3 is up to 0.9801, the width of the edge optical distortion region of the asymmetric laminated glass provided in Comparative Example 7 still exceeds the standard (> 50 mm).

By comparing the experimental data of Comparative Examples 1 and 4 in Table 1 and Table 2, it can also be seen that when the value of (K3z × K3f)/(K2z × K2f) is small, the smaller the value, the larger the width of the edge optical distortion region of the asymmetric laminated glass.

By comparing the experimental data of Comparative Examples 5 and 7 in Table 1 and Table 2, it can also be seen that when the value of (K3z × K3f)/(K2z × K2f) is large, the larger the value, the larger the width of the edge optical distortion region of the asymmetric laminated glass.

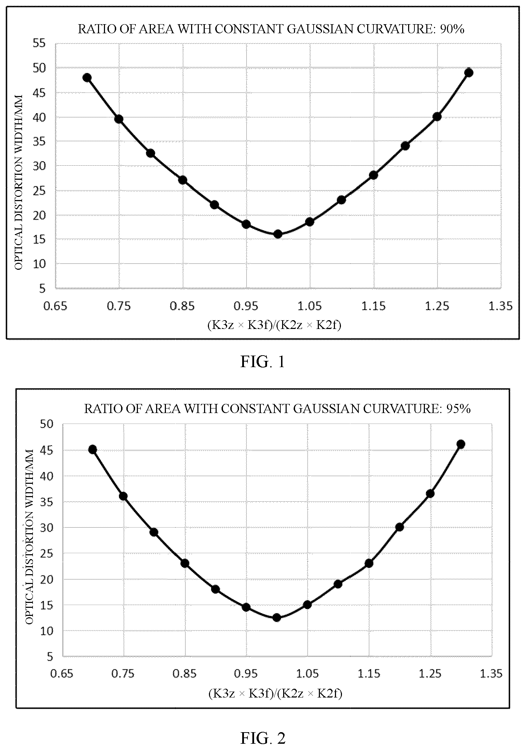

In addition, taking an asymmetric laminated glass formed by the combination of an outer glass panel with a thickness of 3.5 mm (the material is soda-lime silicate glass as shown in Table 3) and an inner glass panel with a thickness of 1.1 mm (the material is aluminosilicate glass as shown in Table 3) as an example, graphs showing a relation between the width (or optical distortion width) of the edge optical distortion region of the asymmetric laminated glass and the value of (K3z × K3f)/(K2z × K2f) under different ratios of the curved surface with constant Gaussian curvature are drawn, as shown in FIGS. 1 to 3, respectively.

FIG. 1 is a graph showing the relation between the width of the edge optical distortion region of the asymmetric laminated glass and the value of (K3z × K3f)/(K2z × K2f) when curved surfaces with constant Gaussian curvature in the second surface of the outer glass panel and the third surface of the inner glass panel have the same ratio, both of which are 90%.

FIG. 2 is a graph showing the relation between the width of the edge optical distortion region of the asymmetric laminated glass and the value of (K3z × K3f)/(K2z × K2f) when curved surfaces with constant Gaussian curvature in the second surface of the outer glass panel and the third surface of the inner glass panel have the same ratio, both of which are 95%.

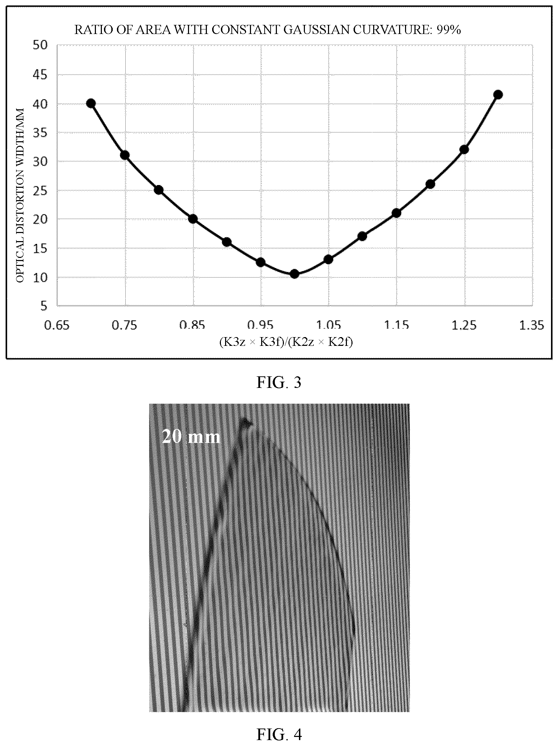

FIG. 3 is a graph showing the relation between the width of the edge optical distortion region of the asymmetric laminated glass and the value of (K3z × K3f)/(K2z × K2f) when curved surfaces with constant Gaussian curvature in the second surface of the outer glass panel and the third surface of the inner glass panel have the same ratio, both of which are 99%.

It can be seen from FIGS. 1 to 3 that when curvature matching degrees of the curved surface regions with constant Gaussian curvature in the second surface of the outer glass panel and the third surface of the inner glass panel are consistent, that is, the values of (K3z × K3f)/(K2z × K2f) are the same, the larger the area ratio of the curved surface region with constant Gaussian curvature, the smaller the width of the edge optical distortion region of the obtained asymmetric laminated glass. When the area ratios of the curved surface regions with constant Gaussian curvature in the second surface of the outer glass panel and the third surface of the inner glass panel are constant, the closer the curvature matching degree, that is, the value of (K3z × K3f)/(K2z × K2f) is to 1, the smaller the width of the edge optical distortion region of the obtained asymmetric laminated glass. That is, under the premise that other conditions are the same, the closer the curvature matching degree, that is, the value of (K3z × K3f)/(K2z × K2f) is to 1, the larger the area ratios of the curved surface regions with constant Gaussian curvature, and the smaller the width of the edge optical distortion region of the obtained asymmetric laminated glass.

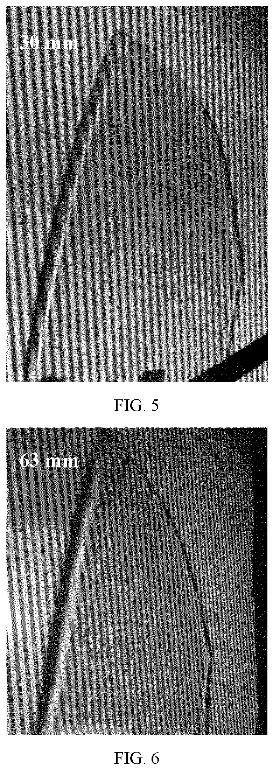

In addition, according to the test method provided above, the width of the edge optical distortion (vertical stripe optical distortion) region of the asymmetric laminated glass provided in Example 33, Example 35, Comparative Example 6 and Comparative Example 7 of the present invention was tested, and the obtained measured optical distortion diagrams are shown in FIG. 4 to 7, respectively. It can be seen from FIGS. 4 to 7 that the width of the edge optical distortion region of the asymmetric laminated glass provided in the examples of the present invention is within 50 mm, while the width of the edge optical distortion region of the asymmetric laminated glass provided in the comparative examples is greater than 50 mm.

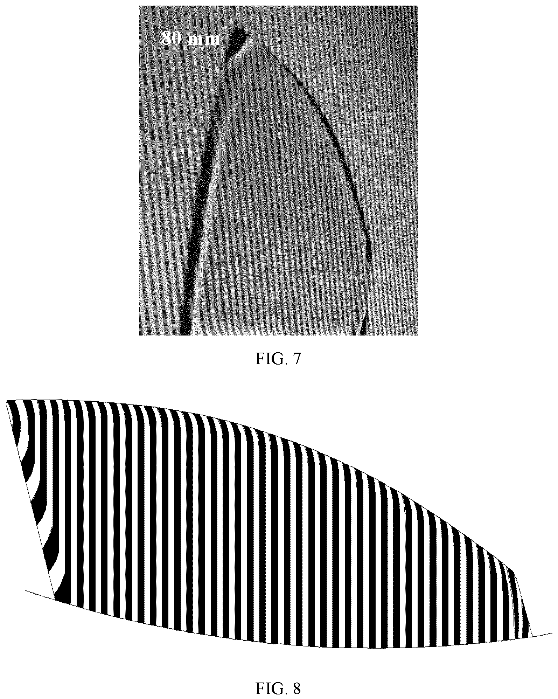

FIG. 8 is a schematic simulation diagram of the edge optical distortion region of the asymmetric laminated glass provided in Example 35 of the present invention. As can be seen from FIG. 8, in Example 35 of the present invention, the curvature matching design is used to enable the obtained asymmetric laminated glass to project zebra stripes with a width of 12 mm at a certain angle, and the width of the edge optical distortion region generated by the projection surface is reduced to less than 50 mm.

In summary, the examples of the present invention control the width of the edge optical distortion region of the asymmetric laminated glass within 50 mm through the curvature matching design of the outer glass panel and the inner glass panel, and can improve the feasibility of manufacturing the thinner inner glass panel by thermoforming at the same time, that is, reduce the difficulty of manufacturing the inner glass panel.

The above is merely specific examples of the present invention, and cannot be used to limit the scope of the invention. Therefore, replacement of equivalent components or equivalent changes and modifications made according to the protection scope of the patent of the present invention should still fall within the scope of the present patent. In addition, the technical features of the present invention can be freely combined with each other, the technical features and the technical inventions can be freely combined with each other, and the technical inventions can be freely combined with each other.

## Claims

1. An asymmetric laminated glass, comprising:
an outer glass panel;
an inner glass panel; and
an intermediate layer disposed between the outer glass panel and the inner glass panel, a thickness of the outer glass panel being greater than that of the inner glass panel, wherein
a surface region of at least 90% or more in each of a second surface of the outer glass panel and a third surface of the inner glass panel is a curved surface with constant Gaussian curvature, the second surface of the outer glass panel has a major curvature K2z and a minor curvature K2f in the region, the third surface of the inner glass panel has a major curvature K3z and a minor curvature K3f in the region, and K2f > K3f and 0.7 ≤ (K3z × K3f)/(K2z × K2f) ≤ 1.3 are satisfied.

2. An asymmetric laminated glass, comprising:
an outer glass panel and an inner glass panel which are not simultaneously formed; and
an intermediate layer disposed between the outer glass panel and the inner glass panel, a thickness of the outer glass panel being greater than that of the inner glass panel, wherein
a surface region of at least 90% or more in each of a second surface of the outer glass panel and a third surface of the inner glass panel is a curved surface with constant Gaussian curvature, the second surface of the outer glass panel has a major curvature K2z and a minor curvature K2f in the region, and the third surface of the inner glass panel has a major curvature K3z and a minor curvature K3f in the region, and K2f > K3f and 0.7 ≤ (K3z × K3f)/(K2z × K2f) ≤ 1.3 are satisfied.

3. The asymmetric laminated glass according to claim 1 or 2, wherein
the thickness of the outer glass panel is greater than or equal to 1.6 mm, and the thickness of the inner glass panel is less than or equal to 1.2 mm.

4. The asymmetric laminated glass according to claim 3, wherein
a nominal thickness of the outer glass panel is ranged from 1.6 mm to 5.0 mm, and a nominal thickness of the inner glass panel is ranged from 0.1 mm to 1.2 mm.

5. The asymmetric laminated glass according to claim 1 or 2, wherein
the outer glass panel and the inner glass panel are separately thermoformed, including the outer glass panel and the inner glass panel being separately thermoformed on the same device in batches, or being separately thermoformed on different devices.

6. The asymmetric laminated glass according to claim 1 or 2, wherein
the outer glass panel and the inner glass panel are of the same or different glass selected from soda-lime silicate glass, aluminosilicate glass, lithium aluminosilicate glass, or lithium aluminoborosilicate glass.

7. The asymmetric laminated glass according to claim 1 or 2, wherein
the major curvature and the minor curvature of the second surface of the outer glass panel respectively satisfy 1 × 10⁻⁴ mm⁻¹ ≤ K2z ≤ 2 × 10⁻³ mm⁻¹ and 1 × 10⁻⁵ mm⁻¹ ≤ K2f ≤ 1 × 10⁻³ mm⁻¹, and the major curvature and the minor curvature of the third surface of the inner glass panel respectively satisfy 1 × 10⁻⁴ mm⁻¹ ≤ K3z ≤ 5 × 10⁻³ mm⁻¹ and 1 × 10⁻⁵ mm⁻¹ ≤ K3f ≤ 5 × 10⁻⁴ mm⁻¹.

8. The asymmetric laminated glass according to claim 1 or 2, wherein
the value of (K3z × K3f)/(K2z × K2f) satisfies 0.8 ≤ (K3z × K3f)/(K2z × K2f) ≤ 1.1.

9. The asymmetric laminated glass according to claim 8, wherein
the value of (K3z × K3f)/(K2z × K2f) satisfies 0.9 ≤ (K3z × K3f)/(K2z × K2f) ≤ 1.0.

10. The asymmetric laminated glass according to claim 1 or 2, wherein
a surface region of at least 95% or more in the second surface of the outer glass panel and the third surface of the inner glass panel is a curved surface with constant Gaussian curvature.

11. The asymmetric laminated glass according to claim 10, wherein
a surface region of at least 99% or more in the second surface of the outer glass panel and the third surface of the inner glass panel is a curved surface with constant Gaussian curvature.

12. The asymmetric laminated glass according to any one of claims 1 and 2 or 10 and 11, wherein
a value of a product S2 × S3 of an area ratio S2 of the curved surface with constant Gaussian curvature in the second surface of the outer glass panel and an area ratio S3 of the curved surface with constant Gaussian curvature in the third surface of the inner glass panel is not less than 0.81.

13. The asymmetric laminated glass according to claim 12, wherein
the value of the product S2 × S3 of the area ratio S2 of the curved surface with constant Gaussian curvature in the second surface of the outer glass panel and the area ratio S3 of the curved surface with constant Gaussian curvature in the third surface of the inner glass panel is not less than 0.9.

14. The asymmetric laminated glass according to claim 13, wherein
the value of the product S2 × S3 of the area ratio S2 of the curved surface with constant Gaussian curvature in the second surface of the outer glass panel and the area ratio S3 of the curved surface with constant Gaussian curvature in the third surface of the inner glass panel is not less than 0.95.

15. The asymmetric laminated glass according to claim 1 or 2, wherein
a width of an edge optical distortion region of the asymmetric laminated glass is less than or equal to 50 mm.

16. A method for manufacturing the asymmetric laminated glass according to any one of claims 1 to 15, the method comprising:
(1) forming the outer glass panel, a surface region of at least 90% or more in the second surface of the outer glass panel being a curved surface with constant Gaussian curvature, and measuring the major curvature K2z and the minor curvature K2f of the second surface of the outer glass panel in the region;
(2) determining the major curvature K3z and the minor curvature K3f of the third surface of the inner glass panel in the region according to expressions K2f > K3f and 0.7 ≤ (K3z × K3f)/(K2z × K2f) ≤ 1.3;
(3) forming the inner glass panel based on parameters determined in step (2), making a surface region of at least 90% or more in the third surface of the inner glass panel a curved surface with constant Gaussian curvature, and then performing ion exchange strengthening on the inner glass panel; and
(4) sandwiching an adhesive between the inner glass panel and the outer glass panel to bond the inner glass panel and the outer glass panel together, thereby obtaining the asymmetric laminated glass.

17. Use of the asymmetric laminated glass according to any one of claims 1 to 15 as window glass for front and rear doors of a motor vehicle, sunroof glass of a motor vehicle, front and rear windshield glass of a motor vehicle, or window glass of a rail transit vehicle.
